# EUROPEAN PATENT APPLICATION

(11) **EP 2 905 766 A1**
(43) Date of publication of application: **12.08.2015**
(21) Application number: 15153208.2
(22) Date of filing: 30.01.2015
(51) Int. Cl.: G09B 9/08, G09B 9/12, G09B 9/42

(54) **Aerodynamic simulator**

(30) Priority: 05.02.2014 LT 2014011
(71) Applicant: UAB "Globalios Technoidejos", 72256 Taurage (LT)
(72) Inventor: Jokubaitis, Viktoras, 72256 Taurage (LT)
(74) Representative: Zaboliene, Reda

(57) **Abstract**

The simulator that can be used for acquiring basic skills in steering airborne apparatus or for aviation amusement, comprising a frame (1) with seat (2), two aerodynamic wings (3) and (4), one of which (3) features variable angle of attack, tiller (6) and control pedals (7), vertical stabilizing plane (22) with rudder (23), and running gear.

The novelty is that frame (1) is mounted so that it can be turned around axis (11) installed in the middle part of frame (1), in parallel to the simulator runway surface (13), at the bottom of middle part of the arched crossbar (12), which comprises two parallel interconnected hollow-core bars (14), in front of the seat (2). Front aerodynamic wing (4) and vertical stabilizing plane (22) with rudder (23) have been moved to the front of the frame (1), in front of which there is a motor (24) driven propeller (5) installed. Furthermore, front aerodynamic wing (4) is equipped with ailerons (21) while rear aerodynamic wing (3) is equipped with elevator (20).

Running gear comprises two main wheels (8) as well as front (9) and rear (10) support wheels. Wheels (8) are placed in fork (15) comprising two pairs of support bars (16) attached to hollow-core bars (14) at one end and interconnected at the other end. The interconnected ends of bars (16) have sockets (17) to insert axles (18) of main wheels (8) of the running gear.

## Description

### FIELD OF THE INVENTION

The invention relates to flight simulators that can be used for acquiring basic skills in steering airborne apparatus when change in their special position is simulated or for aviation amusement.

### BACKGROUND OF THE INVENTION

Patent application GB1366755 (A) introduces a flight simulator comprising a cockpit, a frame moving according to preset program and controlled by shafts rotating around longitudinal and transverse axles. This simulator gives the pilot the basic feelings that would be experienced in a real flight apparatus.

Japan patent application JP2000214758 (A) describes a plane flight simulator comprising a plane simulator and its hanging device installed in a special room that has air inlets at the top, bottom, and sides of the room, through which the air-blowers blow air at the plane simulator from the front. Once the air blowers are turned on, the plane simulator takes off the floor and hovers in the air, then flight controls can be used to perform the same moves in the air as an actual plane would in flight. As the plane simulator has all the equipment and sensors needed for plane control, it produces near-real conditions needed for professional pilot training.

There are also simply-built aerodynamic simulators with broader application potential for acquiring basic skills in steering airborne apparatus and for aviation amusement as well.

SU1668986 presents an aerodynamic simulator that has (as seen from the side) S-shaped frame with seat, driving-wheel and two steerable driven-wheels, controlled horizontal aerodynamic wing, and vertical stabilizing plane with rudder. There is a drive installed in the downward-tilted front part of the frame.

The major disadvantage of the described simulator is relatively great length of the aerodynamic wing, which is needed to obtain sufficient lifting capacity of the wing. Such wing makes the simulator excessively wide, denying efficient use of the width of the simulator runway and increasing the storage area needed when the simulator is not in use.

An improved aerodynamic simulator is described in patent LT 4083 and has (as seen from the side) S-shaped frame with driving-wheel and two steerable driven-wheels, drive installed in the downward-tilted front part of the frame, seat, aerodynamic wings attached at different heights in biplane-style, one wing featuring variable angle of attack, and vertical stabilizing plane with rudder. The aerodynamic wings attached at different heights in biplane-style increase lifting capacity of the simulator without making wings longer and enable operating the simulator on a narrower track. Application of elevator principle in attachment of wing with variable angle of attack boosts efficiency of vertical steering and enables lifting the end part of the simulator to flying position at shorter take-off run length and at lower speed. This increases the functional application potential of the simulator in that it enables using the simulator at shorter track lengths.

However, the simulator according to patent LT 4083 has not only the aforementioned advantages, but also disadvantages. Its frame has no longitudinal degree of freedom, therefore the simulator does not meet the standard principles of piloting, which adversely affects its functionality.

The engine drive used causes knockings and uneven acceleration. Therefore pilot cannot use the simulator without prior acquisition of initial skills of steering. This disadvantage that adversely affects the safety of operating the simulator becomes particularly important in cases of use of the simulator for entertainment purposes, making a special clutch to compensate for torque variations necessary.

Furthermore, the downward-tilted part of the frame, which is intended for mounting the motor, increases air resistance leading to higher energy consumption. Cockpit mounted at the pilot seat area partially covers the lower aerodynamic wing, leading to increased air flow turbulence and decreased lifting capacity of the wing.

### SUMMARY OF THE INVENTION

The aim of the invention is expansion of functional potential of the aerodynamic simulator, increase of acceleration smoothness and pilot safety, saving of energy and increase of lifting capacity resulting from decreased air resistance of the frame.

The aim of the invention is fulfilled in the known aerodynamic simulator that has a frame with seat, two aerodynamic wings, one of which features variable angle of attack, tiller and control pedals, vertical stabilizing plane with rudder, and running gear.

The novelty is that the frame is attached so that it can be moved around the axis installed in front of the seat and in parallel to the surface of the simulator runway, another aerodynamic wing and vertical stabilizing plane with rudder have been moved to the front of the frame, in front of which there is a motor-driven propeller installed. The axis holding the frame is installed at the bottom of the middle part of the arched crossbar that consists of two parallel and interconnected hollow-core bars. The aerodynamic wing moved to the front has ailerons. The rear aerodynamic wing is controlled by elevator. The motor is installed in the middle section of the frame, which is in parallel to the surface of the simulator runway.

The running gear comprises two main wheels as well as front and end support wheels. The main wheels in the running gear (these can be bicycle wheels) are placed in fork comprising two pairs of support bars attached to hollow-core bars at one end and interconnected at the other end. Interconnected ends of the bars have sockets to insert the axles of the main wheels of the running gear. Diagonal struts are attached at one end to internal sides of lower parts of the said forks and at the other end to the said arched crossbar.

Front support wheel of running gear is installed below front aerodynamic wing, behind propeller, while the rear support wheel is installed under the seat. These support wheels do not come into contact with surface of runway when the simulator is in the working position.

The improved simulator gives the pilot basic physical sensations that would be experienced in a real flight apparatus when under the action of airflow generated by propeller and by using tiller and control pedals the simulator is kept balanced relative to horizontal, diagonal, and vertical axles. Moreover, the basic steering skills can be acquired with the simulator still being at standstill. At this stage, the front aerodynamic wing is active complemented by the rear wing functioning in part. As the motor is installed in the middle section of the frame, which is in parallel to the surface of the simulator runway, the frame does not contain a downward-tilted part of the frame, which results in decreased air resistance. The positioning of the rear wing in the front part of the frame gives reduced air flow turbulence.

### BRIEF DESCRIPTION OF THE DRAWINGS

The essence of the build of the aerodynamic simulator is clarified by schematic drawings where:

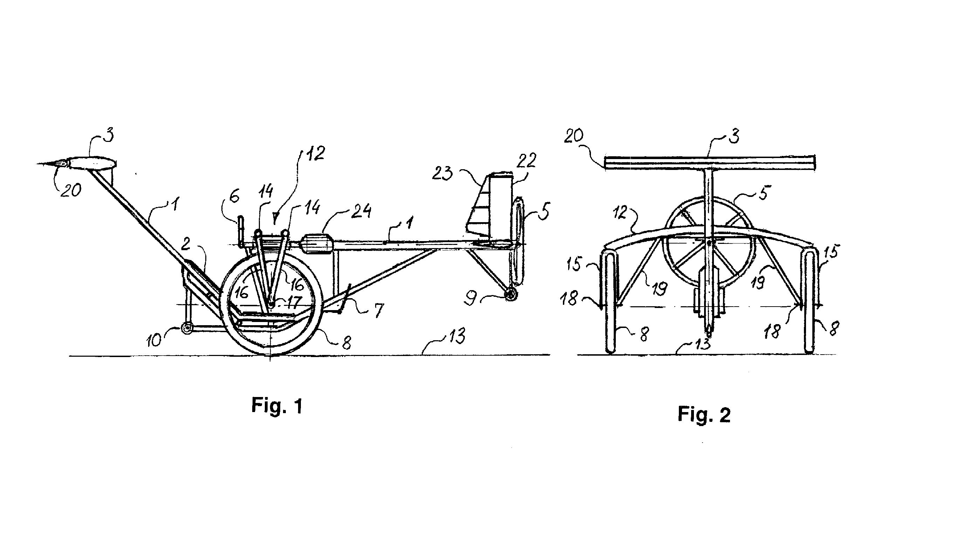

Fig. 1 shows a side view of the simulator;
Fig. 2 shows a rear view;

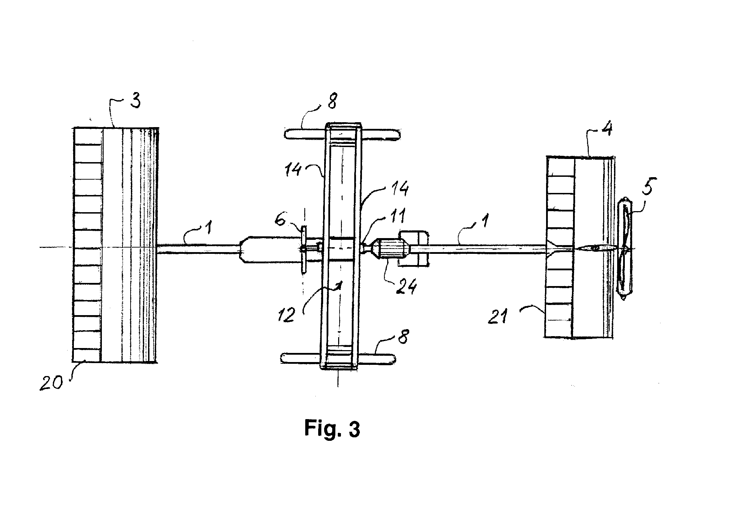

Fig. 3 shows a top view.

### DESCRIPTION OF THE PREFERRED EMBODIMENTS

The aerodynamic simulator has frame 1 with seat 2, rear 3 and front 4 aerodynamic wings, propeller 5 with protection, tiller 6 and control pedals 7 with foot support, running gear comprising two main wheels 8 (e.g., bicycle wheels), and front 9 and rear 10 support wheels.

Frame 1 is attached so that it can rotate around the axis 11 installed at the bottom of middle part of the arched crossbar 12 in front of the seat 2 and in parallel to the simulator runway surface 13. Crossbar 12 comprises two parallel and interconnected hollow-core bars 14.

Two forks 15 are attached to ends of bars 14, these forks comprise two pairs of support bars 16 interconnected at one end and having sockets 17 to insert axles 18 of main wheels 8 of the running gear. To the bottom part of forks 15, from inside part of main wheels 8, one end of diagonal strut 19 is attached, the other end being attached to crossbar 12.

Aerodynamic wing 3 is attached to end part of frame 1 and has elevator 20. At the front part of frame 1, behind propeller 5, there is front aerodynamic wing 4 with two ailerons 21 and there also is vertical stabilizing plane 22 with rudder 23. The middle part of frame 1, which is in parallel to the surface of the simulator runway, contains motor 24 that rotates propeller 5.

Airflow required for the aerodynamic simulator to function is generated by propeller 5 mounted at the front part of frame 1 and driven by motor 24 as well as additional airflow around aerodynamic wings 4 and 3 and vertical stabilizing plane 22 when the simulator moves on the runway surface 13. The principle of steering the simulator is based on steering other flying apparatuses, such as gliders.

When there is no airflow the simulator is in contact with runway surface at two main wheels 8 as well as one of the support wheels 9 or 10. If pilot has no experience, training can be started without even moving anywhere. In that case, for example, wheel 8 chocks can be placed immediately in front of main wheels 8.

Through metal rods and cables (not shown in the drawings) tiller 6 controls elevator 20 that changes angle of attack of rear wing 3 and also the position of ailerons 21 of front wing 4, while control pedals 7 control rudder 20 of stabilizing plane 22, which is connected to pedals 7 over cables (not shown in the drawings).

Once the airflow has been established and the simulator is in standstill or moving, tiller 6 controlled front wing 4 ailerons 21 and rear wing 3 elevator 20 as well as control pedals 7 can be used to maintain balance on two main wheels 8, without support wheel 9 or 10 coming in contact with surface 13.

Turning of frame 1 around horizontal axis 11 installed in front of the seat 2 is performed by using tiller 6 as well as metal rods and cables, with ailerons 21 turned to opposite directions. Simulator standing or running direction can be changed by using control pedals 7 that actuate cables to turn rudder 23 of stabilizing plane 22.

Front 4 and rear 3 aerodynamic wings as well as vertical stabilizing plane 22 with rudder 23 being under action of airflow, tiller 6 can be used to change attack angle of rear wing 3 over elevator 20 and position of ailerons 21 of front wing 4 to keep the simulator balanced in all three dimensions.

## Claims

1. An aerodynamic simulator comprising frame (1) with a seat (2), two aerodynamic wings (3) and (4), one of which (3) features variable angle of attack, a tiller (6) and a control pedals (7), vertical stabilizing a plane (22) with a rudder (23), and a running gear, **characterized in that** frame (1) is attached so that it can rotate around an axis (11) installed in front of the seat (2) and in parallel to the surface of a simulator runway (13), another aerodynamic wing (4) and the vertical stabilizing plane (22) with the rudder (23) have been moved to the front of the frame (1), in front of which there is the motor (24) driven by a propeller (5) installed.

2. Aerodynamic simulator according to claim 1, **characterized in that** axis (11) is installed at the bottom of middle part of an arched crossbar (12).

3. Aerodynamic simulator according to claim 2, **characterized in that** crossbar (12) comprises two parallel interconnected hollow-core bars (14).

4. Aerodynamic simulator according to claim 1, **characterized in that** front aerodynamic wing (4) is equipped with ailerons (21).

5. Aerodynamic simulator according to claim 1, **characterized in that** the rear aerodynamic wing (3) is equipped with an elevator (20).

6. Aerodynamic simulator according to claim 1, **characterized in that** the motor (24) is mounted in the middle part of frame (1), which is in parallel to the simulator runway surface (13).

7. Aerodynamic simulator according to claim 1, **characterized in that** its running gear comprises two main wheels (8) as well as front (9) and end (10) support wheels.

8. Aerodynamic simulator according to claim 7, **characterized in that** the main wheels (8) of running gear are placed in a fork (15) comprising two pairs of support bars (16) attached to end part of hollow-core bars (14) at one end and interconnected at the other end and that interconnected ends of bars (16) have sockets (17) to insert axles (18) of main wheels (8) of the running gear.

9. Aerodynamic simulator according to claim 8, **characterized in that** diagonal struts (19) are attached at one end to internal sides of lower parts of forks (15) of main wheels (8) of the running gear and at the other end to the crossbar (12).

10. Aerodynamic simulator according to claims 7-10, **characterized in that** the front support wheel (9) of running gear is installed under the front aerodynamic wing (4), behind the propeller (5), while the rear support wheel (10) is installed under the seat (2).

11. Aerodynamic simulator according to claims 7-10, **characterized in that** main wheels (8) of the running gear are bicycle wheels.
